# EUROPEAN PATENT SPECIFICATION

(11) **EP 2 878 197 B1**
(45) Date of publication and mention of the grant of the patent: **26.12.2018**
(21) Application number: 13823128.7
(22) Date of filing: 03.07.2013
(51) Int. Cl.: A01N 1/02

(54) **TISSUE PRESERVATION SOLUTION AND TISSUE PRESERVATION METHOD**
GEWEBEKONSERVIERUNGSLÖSUNGSMITTEL UND GEWEBEKONSERVIERUNGSVERFAHREN
SOLUTION DE CONSERVATION DE TISSUS ET PROCÉDÉ DE CONSERVATION DE TISSUS

(30) Priority: 25.07.2012 JP 2012164902
(43) Date of publication of application: 03.06.2015
(73) Proprietor: Osaka University, Suita-shi, Osaka 565-0871 (JP)
(72) Inventor: HAYASHI, Ryuhei, Suita-shi Osaka 565-0871 (JP); NISHIDA, Kohji, Suita-shi Osaka 565-0871 (JP); KATORI, Ryosuke, Suita-shi Osaka 565-0871 (JP)
(74) Representative: Teipel, Stephan
(86) International application number: PCT/JP2013/068283
(87) International publication number: WO 2014/017267

(56) References cited:
- EP-A1- 1 057 405
- WO-A1-2010/046710
- WO-A1-2010/046710
- JP-A- H06 261 933
- JP-A- H11 501 005
- US-A1- 2004 102 415
- GOWER J D ET AL: "Ebselen", BIOCHEMICAL PHARMACOLOGY, ELSEVIER, US, vol. 43, no. 11, 9 June 1992 (1992-06-09), pages 2341-2348, XP025542437, ISSN: 0006-2952 [retrieved on 1992-06-09]
- V. Marshall: "Section II: Organ Preservation - 13 Preservation by simple hypothermia" In: "Procurement, Preservation and Allocation of Vascularized Organs", 1 January 1997 (1997-01-01), Springer-Science+Business Media, B.V., XP55259143, page 126, * table 9 *
- CARLOS E. GUERRERO-BELTRÁN ET AL: "Tert-Butylhydroquinone pretreatment protects kidney from ischemia-reperfusion injury", JN - JOURNAL OF NEPHROLOGY, vol. 25, no. 1, 17 May 2011 (2011-05-17), pages 84-89, XP55259283, IT ISSN: 1121-8428, DOI: 10.5301/JN.2011.8345
- H. S. THATTE ET AL: "Development and Evaluation of a Novel Solution, Somah, for the Procurement and Preservation of Beating and Nonbeating Donor Hearts for Transplantation", CIRCULATION, vol. 120, no. 17, 27 October 2009 (2009-10-27), pages 1704-1713, XP55197234, ISSN: 0009-7322, DOI: 10.1161/CIRCULATIONAHA.108.808907
- THARMARAJAN RAMPRASATH ET AL: "l-Arginine ameliorates cardiac left ventricular oxidative stress by upregulating eNOS and Nrf2 target genes in alloxan-induced hyperglycemic rats", BIOCHEMICAL AND BIOPHYSICAL RESEARCH COMMUNICATIONS, vol. 428, no. 3, 24 October 2012 (2012-10-24), pages 389-394, XP55259118, US ISSN: 0006-291X, DOI: 10.1016/j.bbrc.2012.10.064
- GIOVANNI SCAPAGNINI ET AL: "Modulation of Nrf2/ARE Pathway by Food Polyphenols: A Nutritional Neuroprotective Strategy for Cognitive and Neurodegenerative Disorders", MOLECULAR NEUROBIOLOGY, HUMANA PRESS INC, NEW YORK, vol. 44, no. 2, 19 April 2011 (2011-04-19) , pages 192-201, XP019956963, ISSN: 1559-1182, DOI: 10.1007/S12035-011-8181-5
- GOWER J. D. ET AL.: 'Ebselen. Antioxidant capacity in renal preservation' BIOCHEMICAL PHARMACOLOGY vol. 43, no. 11, 1992, pages 2341 - 2348, XP025542437

## Description

### TECHNICAL FIELD

The present invention relates to a tissue preservation solution and a tissue preservation method each of which is used for preservation of tissues, organs, cells and other components of living organisms.

### BACKGROUND ART

In the fields of cornea, heart, epidermis, etc., a regenerative medicine approach using, for example, a cultured cell sheet prepared from the patient's own cells has been developed for the treatment of serious diseases and intractable diseases for which no effective therapy has been established yet, and such a regenerative medicine approach has already been applied in a clinical setting. For example, in the field of cornea, transplantation of a cultured epithelial sheet prepared from epithelial progenitor cells present in the patient's oral mucosal epithelium or limbal epithelium has been recently performed, and in multiple institutions, proven very effective for intractable corneal diseases. In order to apply such a regenerative medicine approach using cultured cell sheets to more patients, it is important that cultured epithelial cell sheets are produced in production facilities and that the products can be conveyed to hospitals and then preserved for a certain period. In consideration of industrial application, the technique for preserving cell sheets for a certain period will have a growing importance.

In addition, the importance of tissue transplantation is increasing along with the improvement of immunosuppressants etc. In tissue transplantation, it is ideal that a tissue excised from a donor is immediately transplanted to a recipient, but excised tissues cannot always be transplanted immediately. For this reason, the technique for preserving excised tissues for a certain period is very important. Therefore, for future popularization of regenerative medicine and tissue transplantation, it is crucial to develop preservation solutions for regenerative medicine products, such as cell sheets, and transplant tissues including cells and organs.

Conventional tissue preservation solutions are, for example, Euro-Collins solution, UW solution (University of Wisconsin solution, Patent Literature 1), ET-Kyoto solution (Patent Literature 2), etc.

Non-Patent Literature 1 describes the antioxidant capacity of ebselen in renal preservation.

Patent Literature 3 relates to compositions and methods for the preservation of tissues. The compositions comprise Hank's balanced saline solution.

Non-Patent Literature 2 relates to the antioxidant capacity of tert-butylhydroquinone (tBHQ).

### CITATION LIST

### Patent Literature

Patent Literature 1: JP-A 1-246201
Patent Literature 2: JP-A 6-40801
Patent Literature 3: US 2004/0102415 A1

### Non-Patent Literature

Non-Patent Literature 1: Gower J.D. et al., Biochemical Pharmacology, vol. 43, no. 11, pp. 2341-2348, 1992
Non-Patent Literature 2: Carlos E. Guerrero-Beltran, et al., J Nephrol 2012; 25(01): 84-89

### SUMMARY OF INVENTION

### TECHNICAL PROBLEM

An object of the present invention is to provide a tissue preservation solution that has good quality for preservation of tissues, organs, cells and other components of living organisms, and is useful in the fields of regenerative medicine, transplantation medicine, etc.

### SOLUTION TO PROBLEM

The present invention includes the following to achieve the above-mentioned object.
[1] A tissue preservation solution being a Hank's balanced salt solution comprising ebselen.
[2] A tissue preservation method comprising bringing a subject to be preserved into contact with the tissue preservation solution according to [1]

### ADVANTAGEOUS EFFECTS OF INVENTION

The present invention can provide a tissue preservation solution that has good quality for preservation of tissues, organs, cells and other components of living organisms, and is useful in the fields of regenerative medicine, transplantation medicine, etc.

### BRIEF DESCRIPTION OF DRAWINGS

Fig. 1 shows the results of the screening of basal preservation solutions used for the preservation of a cell sheet. (A) shows the residual ATP levels in luciferase transgenic rat-derived oral mucosal cell sheets preserved for 7 days by immersion in various kinds of basal preservation solutions. (B) shows the residual ATP levels in luciferase transgenic rat-derived oral mucosal cell sheets preserved for 7 days and subsequently cultured for 7 days in a KCM medium.
Fig. 2 shows the results of the screening of additives for a basal preservation solution used for the preservation of a cell sheet.
Fig. 3 shows the results of the measurement of the cell viability in human oral cell sheets preserved for 7 days.
Fig. 4 shows the results of HE staining and morphological observation of human oral cell sheets preserved for 7 days.
Fig. 5 shows the results of the measurement of the residual ATP levels in luciferase transgenic rat-derived oral mucosal cell sheets preserved with ebselen-containing PBS as a preservation solution. The measurement time points are after 7 days of preservation and after 7 days of post-preservation culture.
Fig. 6 shows the results of the measurement of the residual ATP levels in luciferase transgenic rat-derived oral mucosal cell sheets preserved with ebselen-containing Optisol GS (trade name) as a preservation solution. The measurement time points are after 7 days of preservation and after 7 days of post-preservation culture.
Fig. 7 shows the results of morphological observation of HE-stained paraffin sections of porcine cornea preserved for 14 days.
Fig. 8 shows the results of morphological observation of ZO-1-immunostained cryosections of porcine cornea preserved for 14 days.
Fig. 9 shows the results of the amount of NQO-1 gene expression measured in a time-course manner after the start of post-preservation culture of human oral cell sheets preserved with ebselen-containing HBSS for 7 days.
Fig. 10 shows the results of the amount of HO-1 gene expression measured in a time-course manner after the start of post-preservation culture of human oral cell sheets preserved with ebselen-containing HBSS for 7 days.
Fig. 11 shows the results of the measurement of the residual ATP levels in luciferase transgenic rat-derived oral mucosal cell sheets preserved for 7 days with tert-butylhydroquinone-containing HBSS as a preservation solution.

### DESCRIPTION OF EMBODIMENTS

### <Tissue Preservation Solution>

The present disclosure provides a tissue preservation solution comprising a compound having a Nrf2 activating effect.

The subject to be preserved with the tissue preservation solution of the present invention encompasses all the components of living organisms, such as tissues, organs and cells, and is not limited to the so-called narrowly-defined "tissues". The cells to be preserved encompass cells constituting tissues, organs, etc., and in addition, cells existing in a dispersed state. Examples of the tissues include epithelial tissue, connective tissue, muscle tissue and nerve tissue. Examples of the organs include brain, spinal cord, stomach, pancreas, pancreatic islet, kidney, liver, thyroid gland, bone marrow, skin, muscle, lung, gastrointestinal tract (for example, large intestine, small intestine, etc.), blood vessel, heart, thymus gland, spleen, peripheral blood, testis, ovary, placenta, uterus, bone and skeletal muscle. Examples of the cells include hepatocytes, splenocytes, neuronal cells, pancreatic β cells, bone marrow cells, epidermal cells, epithelial cells, endothelial cells, smooth muscle cells, fibroblasts, muscle cells, adipocytes, immune cells (for example, macrophages, T cells, B cells, natural killer cells, neutrophils, monocytes, etc.), chondrocytes, osteocytes, osteoblasts and osteoclasts. In addition, cells used for the treatment of infertility and the like, such as sperms, ova and fertilized eggs, are also preferable subjects to be preserved with the preservation solution of the present invention. Further, progenitor cells of the above-listed cells, stem cells (e.g. mesenchymal stem cells, neural progenitor cells, hematopoietic stem cells, etc.), cancer cells, ES cells, iPS cells, etc. are also preferable subjects to be preserved. Furthermore, regenerative medicine products prepared using culture engineering are also preferable subjects to be preserved. Examples of the regenerative medicine products include cultured skin, cultured cartilage, cultured corneal epithelium, various kinds of cell sheets (for example, a cultured epidermal cell sheet, an oral mucosal cell sheet, a limbal epithelial cell sheet, a corneal endothelial cell sheet, a myocardial cell sheet, a myoblast sheet, a cultured chondrocyte sheet, an islet cell sheet, a hepatocyte sheet, a fibroblast sheet, a periodontal ligament cell sheet, etc.), and various kinds of cultured cells for regenerative medicine.

The subject to be preserved may be derived from any kind of living organism. The origin of the subject is preferably an animal, more preferably a vertebrate, and still more preferably a mammal. Examples of the mammal include experimental animals including rodents, such as mice, rats, hamsters and guinea pigs, and rabbits; domestic animals such as pigs, cattle, goats, horses, sheep and minks; pet animals such as dogs and cats; and primates such as humans, monkeys, rhesus macaques, marmosets, orangutans and chimpanzees. Among them, subjects of human origin are particularly preferable.

The tissue preservation solution of the present invention comprises a compound having a Nrf2 activating effect, namely ebselen (Chem Res Toxicol. 19, 1196-204 (2004)). Nrf2 is a mammalian transcription factor having a basic-leucine zipper motif, and is also called NF-E2-related factor 2, nuclear factor erythroid 2-related factor 2, nuclear factor erythroid 2-like 2 (Nfe212), nuclear factor erythroid 2-related transcription factor 2, or the like (Proc Natl Acad Sci USA 91, 9926-30 (1994); Biochem Biophys Res Commun. 209, 40-6 (1995); and the Journal of Biochemistry 78, 79-92 (2006)).

A compound having a Nrf2 activating effect is synonymous with a Nrf2 activator, and is not particularly limited as long as the compound can activate the transcription factor Nrf2. For example, the following food or pharmaceutical ingredients are known as a Nrf2 activator.

### Food ingredients:

sulforaphane (J Nutr. 131 (Suppl 11), 3027S-33S (2001)), tert-butylhydroquinone (TBHQ) (Toxicol. Appl. Pharmacol. 141, 59-67 (1996)), butylated hydroxyanisole (BHA) (Mol Carcinog. 45, 841-50 (2006); Biochem Soc Trans. 28 (2000); and Toxicol. Appl. Pharmacol. 126, 150-55 (1994)), 6-ethoxy-1,2-dihydro-2,2,4-thimethyl-quinoline (ethoxyquin) (Biochem Soc Trans. 28 (2000)), 6-methylsulfinylhexyl isothiocyanate (6-HITC) (J. Biol. Chem. 277, 3456-63 (2002)), cafestol (Food Chem Toxicol. 40, 1155-63 (2002)), kahweol (Food Chem Toxicol. 40, 1155-63 (2002)), curcumin (Biochem J. 371, 887-95 (2003); and Am J Physiol Endocrinol Metab. 293, E645-55 (2007)), demethoxycurcumin (Am J Physiol Endocrinol Metab. 293, E645-55 (2007)), bisdemethoxycurcumin (Am J Physiol Endocrinol Metab. in press (2007)), piperine (J Nutr Biochem. 18, 615-22 (2007)), phenethyl isothiocyanate (Pharm Res. 20, 1351-6 (2003)), carnosol (J Biol Chem. 279, 8919-29 (2004)), zerumbone (FEBS Lett. 572, 245-50 (2004)), resveratrol (Biochem Biophys Res Commun. 331, 993-1000 (2005)), lycopene (Mol Cancer Ther. 4, 177-86 (2005)), diallyl sulfide (Free Radic Biol Med. 37, 1578-90 (2004); and Arch Biochem Biophys. 432, 252-60 (2004)), diaryl trisulfide (Free Radic Biol Med. 37, 1578-90 (2004)), xanthohumol (Chem Res Toxicol. 18, 1296-305 (2005)), 3-O-caffeoyl-1-methylquinic acid (Free Radic Biol Med. 40, 1349-61 (2006)), chlorogenic acid (J Biol Chem. 280, 27888-95 (2005)), α-lipoic acid (Proc Natl Acad Sci USA. 101, 3381-6 (2004)), acetylcarnitine (J Neurosci Res. 79, 509-21 (2005)), avicins (J Clin Invest. 113, 65-73 (2004)), fisetin (Invest Ophthalmol Vis Sci. 47, 3164-77 (2006)), luteolin (Invest Ophthalmol Vis Sci. 47, 3164-77 (2006)), eriodictyol (Invest Ophthalmol Vis Sci. 47, 3164-77 (2006)), galangin (Invest Ophthalmol Vis Sci. 47, 3164-77 (2006)), epigallocatechin-3-gallate (Pharm Res. 22, 1805-20 (2005)), quercetin (Invest Ophthalmol Vis Sci. 47, 3164-77 (2006); and Free Radic Biol Med. 42, 1690-703 (2007)), quercetin 3-O-β-L-arabinopyranoside (Food Chem Toxicol. 44, 1299-307 (2006)), quercetin 3-O-β-D-glucopyranoside (Food Chem Toxicol. 44, 1299-307 (2006)), 1,2,3,4,6-penta-O-galloyl-β-D-glucose (World J Gastroenterol. 12, 214-21 (2006)), acteoside (Pharmazie. 61, 356-8 (2006)), isohumulone (PCT/JP2005/019415), isocohumulone (PCT/JP2005/019415), 4-acetyl-3-methyl-dihydro-furan-2-one, 4-(1-hydroxy-ethyl)-3-methyl-dihydro-furan-2-one, 5-hydroxy-3,4,5-trimethyl-5-H-furan-2-one, 1-(4-methyl-5-oxo-tetrahydro-furan-3-yl)-ethyl acetate, (5-ethyl-tetrahydro-furan-2-yl)-acetic acid, 2-phenyl-pyran-4-one, dihydro-4-phenyl-2(3H)-furanone, 2-(2-formylpyrrol-1-yl)-4-methylvaleric acid (Japanese Patent Application No. 2007-043783), dehydrocostus lactone (Eur J Pharmacol. 565, 37-44 (2007)), and triphlorethol-A (FEBS Lett. 581, 2000-8 (2007)).

### Pharmaceutical ingredients:

oltipraz (4-methyl-5-[2-pyrazinyl]-1,2-dithiol-3-thione) (Proc Natl Acad Sci USA 98, 3410-5 (2001)), acetaminophen (Hepatology 39, 1267-76 (2004)), aspirin (Carcinogenesis 27, 803-10 (2006)), flunarizine (Cell Death Differ. 13, 1763-75 (2006)), monosodium α-luminol (Galavit) (J Virol, 80(9): 4557-69 (2006)), apomorphine (J Neurosci Res. 84, 860-6 (2006)), bucillamine (Biochem Pharmacol. 72, 455-62 (2006)), ebselen (Chem Res Toxicol. 19, 1196-204 (2004)), deltamethrin (Toxicol Lett. 171, 87-98 (2007)),15-deoxy-Δ(12,14)-prostagladin J2 (15d-PGJ2) (J Biol Chem. 275, 11291-9 (2000)), 4-hydroxy-2-nonenal (Circ Res. 94, 609-16 (2004)), 2-indol-3-yl-methylenequinuclidin-3-ol (Cancer Res. 63, 5636-45 (2003)), 4-hydroxyestradiol (Biochim Biophys Acta. 1629, 92-101 (2003)), 3',4',5',3,4,5-hexamethoxy-chalcone (Br J Pharmacol. 142, 1191-9 (2004)), 2-cyano-3,12-dioxooleana-1,9(11)-dien-28-oic acid (Cancer Res. 65, 4789-98 (2005)), 1-[2-cyano-3,12-dioxooleana-1,9(11)-dien-28-oyl]imidazole (Cancer Res. 65, 4789-98 (2005)), α-methylene-y-butyrolactone (Eur J Pharmacol. 56537-44 (2007)), nitro-linoleic acid (Am J Physiol Heart Circ Physiol. 293, H770-6 (2007)), 3-hydroxyanthranilic acid (Atherosclerosis. 187, 274-84 (2006)), bis(2-hydroxybenzylidene)acetone (Cancer Lett. 245, 341-9 (2007)), and 2',4',6'-tris(methoxymethoxy)chalcone (Biochem Pharmacol. 74, 870-80 (2007)).

The tissue preservation solution of the present disclosure comprises one or more compounds having a Nrf2 activating effect, for example, ebselen and one or more of the above-listed compounds. Among the compounds having a Nrf2 activating effect, electrophiles are preferable. Electrophiles are molecules intramolecularly having areas of low electron density due to polarization. Electrophiles stimulate Keap1, which serves as a suppressor of Nrf2 in stress-free cells, and thereby allow Nrf2 to be released from Keap1 and activated. Among the above-listed compounds having a Nrf2 activating effect, exemplary electrophiles include tert-butylhydroquinone (hereinafter referred to as "tBHQ"), ebselen, sulforaphane and curcumin. In particular, tBHQ and ebselen.

The tissue preservation solution of the present disclosure can be produced by dissolving one or more compounds having a Nrf2 activating effect (including ebselen) in a preservation solution as a base (basal preservation solution) . For example, the production may be performed by aseptical addition of the compound having a Nrf2 activating effect to a sterilized basal preservation solution, or by addition of the compound having a Nrf2 activating effect to a basal preservation solution and subsequent sterilization of the solution. For the sterilization, known sterilization methods such as autoclave sterilization and filter sterilization can be used. The produced tissue preservation solution is preferably stored at a low temperature of about 2 to 8°C until use.

The amount of the compound having a Nrf2 activating effect in the tissue preservation solution of the present invention is not particularly limited as long as the content is not toxic to tissues to be preserved. The optimal content of the compound having a Nrf2 activating effect can be determined depending on the kind of the compound. The ebselen content is preferably 0.1 to 100 µM, more preferably 0.5 to 50 µM, and still more preferably 1 to 10 µM.

The basal preservation solution is Hank's balanced salt solution (hereinafter referred to as "HBSS"). In order to prevent tissue swelling or shrinkage during the preservation period, the tissue preservation solution of the present invention preferably has an osmotic pressure of about 270 to 450 Osm/l. The pH of the tissue preservation solution is preferably in the range of about 7 to 8 in order to prevent cell death under acidic condition.

### <Tissue Preservation Method>

The present invention provides a tissue preservation method which uses the above-described tissue preservation solution of the present invention. The tissue preservation method of the present invention is not particularly limited as long as it comprises bringing tissues, organs, cells or others to be preserved into contact with the tissue preservation solution of the present invention.

In the first embodiment of the tissue preservation method of the present invention, tissues, organs, cells or others to be preserved are immersed in the tissue preservation solution of the present invention so that the contact of the subject with the preservation solution is achieved. The volume of the preservation solution used for a subject to be preserved is not particularly limited as long as the volume is enough for complete immersion of the subject.

The container used for the tissue preservation method is not particularly limited and may be a hermetic container or an open container. The container can be selected as appropriate depending on the purpose. Preferred is a container capable of maintaining aerobic conditions (in which gases such as oxygen, carbon dioxide and nitrogen can freely flow into and out of the container).

The preservation temperature is not particularly limited, but is preferably in the range of -196 to 20°C, more preferably -20 to 15°C, and still more preferably 0 to 10°C. In the case where a subject to be preserved is cryopreserved after immersed in the tissue preservation solution of the present invention, a known cryoprotective agent (for example, DMSO, glycerin, etc.) may be added to the tissue preservation solution if needed.

The preservation period can be set as appropriate depending on the purpose. The preservation period can usually be set to about several minutes to about 3 months, and is preferably about 30 minutes to about 1 month, more preferably about 30 minutes to about 20 days.

In the second embodiment of the tissue preservation method of the present invention, the tissue preservation solution of the present invention was, for example, sprayed onto the surface of tissues to be preserved so that the contact of the tissues with the preservation solution is achieved. The second embodiment is an example for the case where the tissue preservation solution of the present invention is used as a wash solution or a perfusate for tissues during open surgery or endoscopic surgery. The second embodiment is suitable for the application where tissues of a living organism are preserved as they are for a short period of time. The preservation period in the second embodiment is usually about 1 minute to about 10 hours, preferably about 5 minutes to about 5 hours, and more preferably about 5 minutes to about 2 hours. During the preservation period, the tissue surface is kept in contact with the tissue preservation solution of the present invention by spraying, perfusion or the like.

The present inventors have obtained a new finding that a tissue (cell sheet) preserved with HBSS without the compound having a Nrf2 activating effect show a higher residual ATP level (cell viability) both after the preservation period and after post-preservation culture, as compared to the counterparts preserved with existing tissue preservation solutions. That is, it was found that HBSS has better quality for tissue preservation as compared to the existing tissue preservation solutions (see Example 1). Therefore, the present invention provides a tissue preservation method comprising bringing tissues into contact with HBSS and ebselen. The same embodiments as described above apply to the tissue preservation method using HBSS and ebselen.

### <Usefulness of Present Invention>

The tissue preserved with the tissue preservation solution of the present invention has been shown to have a higher post-preservation cell viability as compared to the counterparts preserved with existing tissue preservation solutions. In addition, the present inventors have confirmed that porcine corneal tissue preserved with the tissue preservation solution of the present invention for 2 weeks still retains its morphology. Thus, the preservation solution of the present invention has much better quality for tissue preservation as compared to existing tissue preservation solutions, and is very useful as a tissue preservation solution. In this context, the tissue preservation solution of the present invention can be used in the field of transplantation medicine to preserve donor tissues for a certain period, thus enabling tissue transplantation to recipients in remote places. In addition, the tissue preservation solution of the present invention can be used in the field of regenerative medicine to preserve, for a certain period, regenerative medicine products such as cultured cell sheets produced in production facilities, thus enabling regenerative medicine approaches to be applied to more patients. Further, the tissue preservation solution of the present invention can be used to maintain high cell viability, thus improving fertility treatment results, which are greatly affected by cells' survival condition. Furthermore, the tissue preservation solution of the present invention is useful as a preservation solution for ES cells and iPS cells.

### EXAMPLES

Hereinafter, the present invention will be illustrated in detail by examples.

### <Reference Example 1: Screening of Basal Preservation Solutions Using Luciferase Transgenic Rat-Derived Oral Mucosal Cell Sheet>

### (1) Cell Sheet Preparation

An oral tissue of a luciferase transgenic rat (Hakamata Y, Murakami T, Kobayashi E., Transplantation 2006; 81(8): 1179-1184) was provided by Dr. Eiji Kobayashi in the Division of Development of Advanced Treatment, Jichi Medical University. The oral tissue was washed twice with DMEM (Gibco) supplemented with 1% antibiotics and antimycotics (AbAm, Gibco). The washed tissue was immersed in a solution of dispase I (1,000 PU/ml) in DMEM supplemented with 1% AbAm at 4°C for 4 hours. After the dispase treatment, the tissue was transferred into a 0.02% EDTA solution (nacalai tesque), immersed therein at room temperature for 2 minutes, and washed twice with PBS. From this oral tissue, the oral mucosal epithelium together with its basement membrane was separated with forceps. The separated epithelium was immersed in a 0.25% trypsin-EDTA solution (Gibco) at 37°C for 20 minutes for trypsinization, and then suspended in a 10% KCM medium (Hayashi R, Yamato M, Takayanagi H, Oie Y, Kubota A, Hori Y, Okano T, Nishida K., Tissue Engineering Part C Methods 2010; 16(4): 553-560). The cells were then seeded at a concentration of 4 × 10⁵ cells/well in a 6-well plate in which mitomycin C-treated NIH/3T3 cells were previously seeded, and cultured under the conditions of 37°C and 5% CO₂. After grown to confluence, the oral mucosal epithelial cells were treated with a 0.25% trypsin-EDTA solution at 37°C for 5 minutes, and resuspended in a 10% KCM medium. A 1/150 volume of the cell suspension was seeded in each well of a 96-well plate (white/clear, Tissue culture treated plate, Flat Bottom with Lid (BD Falcon™)), and cultured under the conditions of 37°C and 5% CO₂ for 14 days to give a luciferase transgenic rat-derived oral mucosal cell sheet. For experiments, sheets of oral mucosal epithelial cells passaged 5 times or less were used.

### (2) Method for Measurement of ATP Level in Cell Sheet

The ATP level in a cell sheet correlates with the viability of the cell sheet. The ATP levels in a cell sheet before preservation, after preservation and after post-preservation culture were measured as an indicator of the viability of the cell sheet. The method for measurement of the ATP level in a cell sheet is as follows. The luciferase transgenic rat-derived oral mucosal cell sheet prepared in each well of the 96-well plate (white/clear, Tissue culture treated plate) was washed twice with HBSS, 190 µl of HBSS was added to each well, and the 96-well plate was left to stand at 4°C for 1 hour. After this, the 96-well plate was set in a luminescence microplate reader Centro LB960 (Berthold Technologies GmbH & Co. KG), and according to the device settings of the microplate reader, addition of luciferin (final concentration; 0.19 mg/ml) and measurement of the ATP level were conducted. The measurement temperature was 4°C, the single reading time was 2 seconds, and the total reading time was 12 minutes. The maximum luminescence was determined as a measured value for the ATP level. After the measurement, the cell sheet was washed 3 times with HBSS and then preserved with a given preservation solution at 4°C for 7 days. After the end of the preservation period, the cell sheet was washed twice with HBSS and measured for the ATP level in the same manner as above. After the measurement, the cell sheet was washed twice with HBSS and cultured in 200 µl/well of 10% KCM under the conditions of 37°C and 5% CO₂ for 7 days. After 7 days of the culture, the cell sheet was washed twice with HBSS and measured for the ATP level again in the same manner as above.

### (3) Preservation Test and Post-Preservation Culture Test

As a basal preservation solution, the following six kinds of solutions were used: PBS, HBSS, DMEM/F12, UW, ET-Kyoto and Optisol GS (trade name). After the ATP level before preservation was measured, the luciferase transgenic rat-derived oral mucosal cell sheet was washed 3 times with HBSS and preserved with 300 µl/well of a given basal preservation solution at 4°C for 7 days. After the end of the preservation period, the cell sheet was washed twice with HBSS and measured for the ATP level. After the measurement, the cell sheet was washed twice with HBSS and cultured in 200 µl/well of 10% KCM under the conditions of 37°C and 5% CO₂. After 7 days of the post-preservation culture, the cell sheet was measured for the ATP level.

### (4) Results

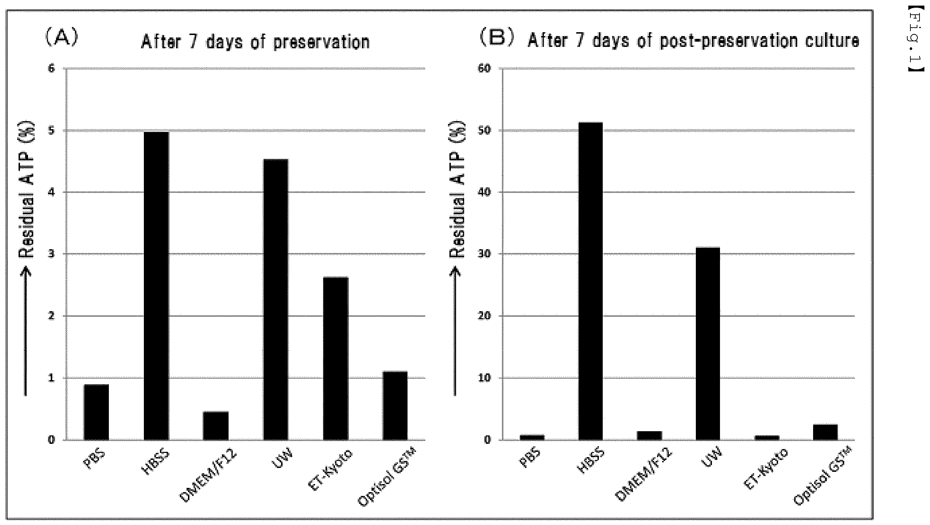

The results are shown in Figs. 1(A) and (B). (A) shows the residual ATP level after 7 days of preservation, and (B) shows the residual ATP level after 7 days of post-preservation culture. As is clear from Fig. 1(A), in the comparison of the residual ATP level after 7 days of preservation, HBSS shows the highest value (about 5%), followed by UW, ET-Kyoto and Optisol GS (trade name). As is clear from Fig. 1(B), when HBSS or UW was used for cell sheet preservation, a cell sheet was still formed after the post-preservation culture, and the residual ATP level after the post-preservation culture was higher (about 50%) in the cell sheet preserved with HBSS than that in the cell sheet preserved with UW. These results show that HBSS has better quality for cell sheet preservation as compared to UW.

### <Example 2: Screening of Additives for Basal Preservation Solution Using Luciferase Transgenic Rat-Derived Oral Mucosal Cell Sheet>

### (1) Experimental Method

HBSS was used as the basal preservation solution, and the following ten kinds of compounds were used as an additive: dextran 40 (0.2 g/l, 2 g/l, 20 g/l), chondroitin sulfate (0.01%, 0.1%, 1%), N-acetylcysteine (0.1 mM, 1 mM, 10 mM), allopurinol (0.1 mM, 1 mM, 10 mM), glutathione (0.3 mM, 3 mM, 30 mM), adenosine (0.05 mM, 0.5 mM, 5 mM), hyaluronan (0.01%, 0.1%, 0.5%), dibutyryl cAMP (0.2 mM, 2 mM, 20 mM), trehalose (12 mM, 120 mM, 1200 mM) and ebselen (1 µM, 10 µM, 100 µM). The concentrations of each additive were as set forth above in parentheses and each experiment was performed in triplicate (n = 3). The ATP levels before and after 7 days of preservation were measured in the same manner as in Example 1.

### (2) Results

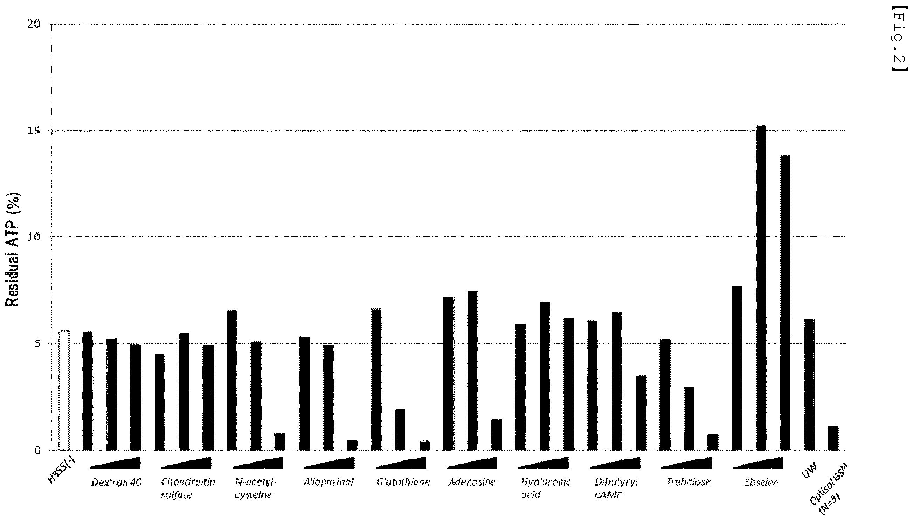

The results are shown in Fig. 2. As is clear from Fig. 2, when ebselen was used as an additive, the residual ATP level after 7 days of preservation was remarkably higher than that in the basal preservation solution alone.

### <Example 3: Efficacy Verification of Ebselen-Containing Preservation Solution Using Human Oral Cell Sheet>

### (1) Cell Sheet Preparation

Cryopreserved human oral keratinocytes (HOK, ScienCell™ Research Laboratories) were thawed at 37°C and suspended in CnT-24. The HOK cells were seeded in a T75 flask and cultured under the conditions of 37°C and 5% CO₂. After grown to confluence, the HOK cells were treated with a 0.25% trypsin-EDTA solution for detachment, and suspended in Cnt-24. The cell suspension was centrifuged at 1200 rpm for 5 minutes, the supernatant was removed, and the cell pellet was resuspended in CnT-24. This cell suspension was seeded at 5 × 10⁵ cells per T75 flask and cultured under the conditions of 37°C and 5% CO₂. After grown to confluence again, the HOK cells were detached in the same manner as above, and suspended in 10% KCM. The HOK cell suspension was seeded at 3 × 10⁵ cells/dish in 35-mm UpCell (registered trademark, CellSeed) in which mitomycin C-treated NIH/3T3 cells were previously seeded, and cultured under the conditions of 37°C and 5% CO₂ for 14 days to give a human oral mucosal cell sheet.

### (2) Measurement of Cell Viability after 7 Days of Preservation

PBS, Optisol GS (trade name), HBSS and HBSS containing ebselen (10 µM) were used as a preservation solution. As in Example 1, the prepared cell sheet was immersed in a given preservation solution and preserved at 4°C for 7 days. The cell viability was determined before and after 7 days of the preservation. For the determination of the cell viability, flow cytometry was used in combination with 7-amino-actinomycin D (7-AAD) staining. The specific procedure is as follows. The cell sheet was detached, and one half of the detached cell sheet was treated with a 0.25% trypsin-EDTA solution and suspended therein. The trypsin was neutralized with 5% FBS in PBS, and the cell suspension was centrifuged at 1200 rpm for 5 minutes. After the centrifugation, the supernatant was removed, the cell pellet was suspended in 1 ml of PBS supplemented with 5% FBS, and the cell number was counted. After this, 20 µl of 7-AAD was added to the cell suspension, which was then left to stand in a dark place at room temperature for 20 minutes and subsequently subjected to flow cytometric analysis. The 7-AAD negative cell population was defined as live cells, the 7-AAD positive cell population was defined as dead cells, and based on the definition, the cell viability was calculated.

### (3) Morphology of Cell Sheet after 7 Days of Preservation (Hematoxylin Eosin (HE) Staining)

One fourth of the cell sheet was immersed in a 10% formalin solution overnight and then embedded in paraffin. The paraffin-embedded cell sheet was sliced at 3-µm thickness to give paraffin sections. For deparaffinization, these paraffin sections were immersed successively in xylene twice, 100% ethanol, 99% ethanol, 95% ethanol, 90% ethanol, 80% ethanol, 70% ethanol and distilled water. Then, the sections were immersed in TBS for 5 minutes, rinsed with distilled water, and stained with hematoxylin for 10 minutes. After the hematoxylin staining, the sections were washed with running water for 10 minutes and bleached with 1% hydrochloric acid in ethanol for 10 seconds. Immediately after the bleaching, the sections were washed with running water for 1 minute and immersed in distilled water for 15 minutes. Then, the sections were stained with eosin for 2 minutes and washed with running water for 5 minutes. The sections were immersed in 100% ethanol 5 times and in xylene 3 times for clearing, and then coverslipped with a mounting medium (MGK-S, Matsunami Glass Ind., Ltd.). The sections were observed with BIOREVO BZ-9000 microscope (KEYENCE) using a 20× object lens.

### (4) Results on Cell Viability

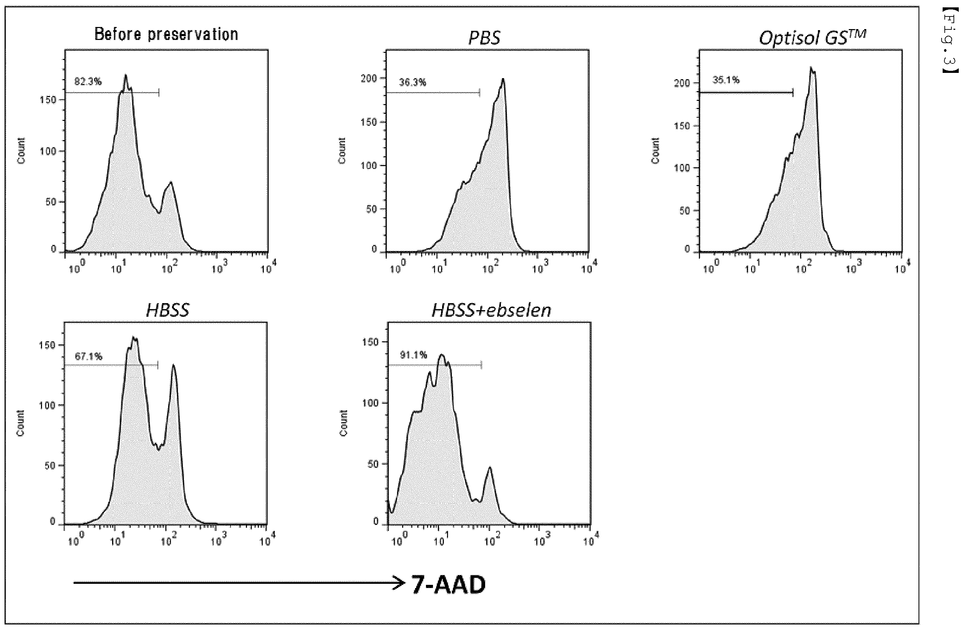

Fig. 3 shows the charts of the flow cytometric analysis. The cell number, cell viability and live cell count per cell sheet before and after preservation with each preservation solution are shown in Table 1. As is clear from Fig. 3 and Table 1, the cell viability in the cell sheet preserved with ebselen-containing HBSS was 91.1% and higher by 24% than that in the cell sheet preserved with ebselen-free HBSS, and about 4 times more live cells were retained in the presence of ebselen than in its absence.

**Table 1**

| | Before preservation | PBS | Optisol GS™ | HBSS | HBSS + ebselen |
|---|---|---|---|---|---|
| Cell number (cells/sheet) | 12.65 × 10⁵ | 0.55 × 10⁵ | 1.85 × 10⁵ | 2.20 × 10⁵ | 7.10 × 10⁵ |
| Viability (%) | 82.3 | 36.3 | 35.1 | 67.1 | 91.1 |
| Live cell number (cells/sheet) | 10.41 × 10⁵ | 0.20 × 10⁵ | 0.65 × 10⁵ | 1.48 × 10⁵ | 6.47 × 10⁵ |

### (5) Results of HE Staining

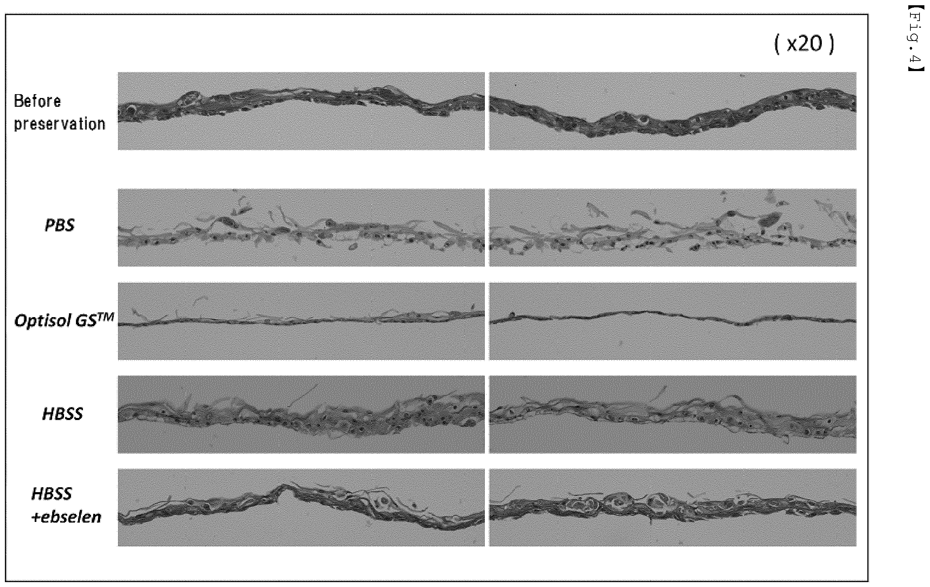

The results are shown in Fig. 4. As is clear from Fig. 4, the cell sheet preserved with ebselen-containing HBSS well retained its initial thickness and form. The cell sheet preserved with ebselen-free HBSS also retained its initial thickness and form, albeit to a slightly lesser extent than the cell sheet preserved with ebselen-containing HBSS. On the other hand, the cell sheet preserved with PBS greatly lost its initial form, and the cell sheet preserved with Optisol GS (trade name) lost its stratified epithelial layer and was almost in a monolayer form.

### <Reference Example 4: Addition of Ebselen to PBS and Optisol GS (trade name)>

### (1) Experimental Method

Ebselen-containing PBS and ebselen-containing Optisol GS (trade name) were used as a preservation solution, and the ATP levels before preservation, after 7 days of preservation, and after 7 days of post-preservation culture were measured in the same manner as in Example 1. The ebselen concentration was at the following three levels: 1 µM, 10 µM and 100 µM.

### (2) Results

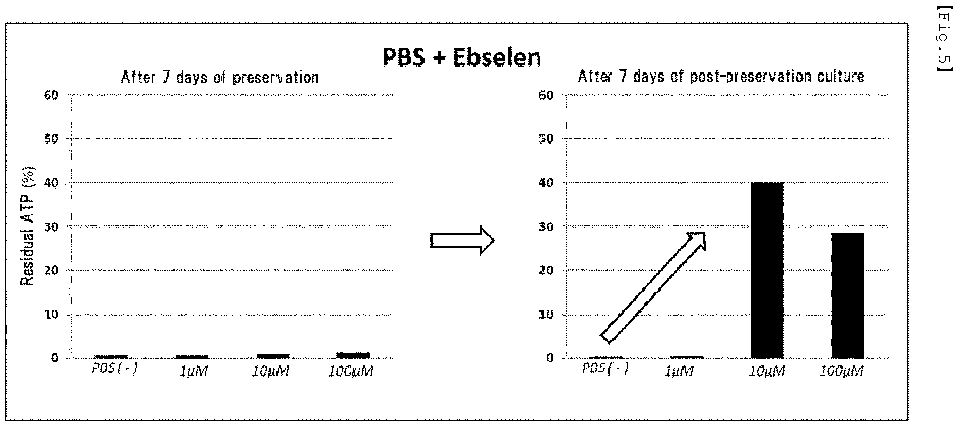

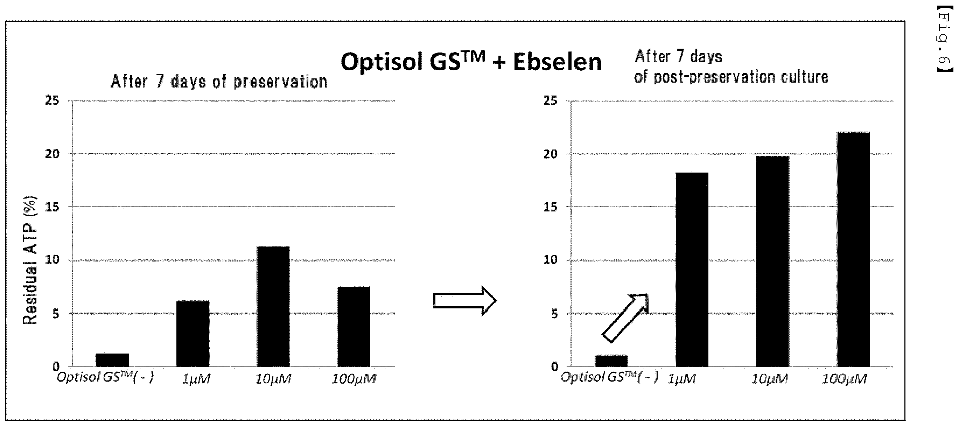

The results for PBS are shown in Fig. 5 and the results for Optisol GS (trade name) are shown in Fig. 6. Fig. 5 shows that, when ebselen-containing PBS was used as a preservation solution and the ebselen concentration was 10 µM or more, the cells proliferated in the post-preservation culture. Fig. 6 shows that, when ebselen-containing Optisol GS (trade name) was used as a preservation solution and the ebselen concentration was 1 µM or more, the cells proliferated in the post-preservation culture. These results demonstrate that PBS and Optisol GS (trade name), both of which are almost incapable of preserving a cell sheet when used alone, can be used as a preservation solution when containing ebselen.

### <Example 5: Efficacy Verification of Ebselen-Containing Preservation Solution Using Porcine Corneal Tissue>

### (1) Porcine Cornea Dissection

A porcine eyeball was incised around the limbus with a scalpel, and a tissue containing the cornea with a 2- to 3-mm-wide scleral rim was excised with scissors. Then, the lens was removed with forceps and the iris was removed under a stereomicroscope to prepare a corneoscleral tissue.

### (2) Comparison of Tissue Morphology between Before and After 14 Days of Preservation

As a preservation solution, the following six kinds of solutions were used: PBS, ebselen-containing PBS, Optisol GS (trade name), ebselen-containing Optisol GS (trade name), HBSS and ebselen-containing HBSS. The concentration of ebselen in each preservation solution was 10 µM. The dissected porcine cornea was immersed in 9 ml of a given preservation solution and preserved at 4°C for 14 days. After 14 days of the preservation, the cornea was taken out from the preservation solution and cut in half with scissors. One half was immersed in a 10% formalin solution overnight and embedded in paraffin, and the other half was embedded in an embedding medium for cryosectioning (O.C.T. Compound, Sakura Finetek Japan, Co., Ltd.) and frozen in a block.

The porcine corneoscleral tissue was HE-stained in the following manner. The paraffin-embedded corneal tissue was sliced at 3-µm thickness to give paraffin sections. For deparaffinization, these paraffin sections were immersed successively in xylene twice, 100% ethanol, 99% ethanol, 95% ethanol, 90% ethanol, 80% ethanol, 70% ethanol and distilled water. The sections were immersed in TBS for 5 minutes, rinsed with distilled water, and stained with hematoxylin for 10 minutes. After the hematoxylin staining, the sections were washed with running water for 10 minutes and bleached with 1% hydrochloric acid in ethanol for 10 seconds. Immediately after the bleaching, the sections were washed with running water for 1 minute and immersed in distilled water for 15 minutes. Then, the sections were stained with eosin for 2 minutes and washed with running water for 5 minutes. The sections were immersed in 100% ethanol 5 times and in xylene 3 times for clearing, and then coverslipped with a mounting medium (MGK-S, Matsunami Glass Ind., Ltd.). The sections were observed with BIOREVO BZ-9000 microscope (KEYENCE) using a 20× object lens.

ZO-1 immunostaining was performed in the following manner. The cryoembedded corneal tissue was sliced at 10-µm thickness to give cryosections. After adequate drying, the cryosections were washed with 0.1 M TBS for 5 minutes to remove the O.C.T. Compound. Then, for blocking, the sections were immersed in 0.1 M TBS (5% NST) supplemented with 5% donkey serum (Jackson Immuno Research) and 0.3% Triton X-100 at room temperature for 1 hour. After removal of the 5% NST, the sections were immersed in a primary antibody solution containing a mouse anti-ZO-1 monoclonal antibody (Invitrogen) at a final concentration of 5 µg/ml in 0.1 M TBS (1% NST) supplemented with 1% donkey serum and 0.3% Triton X-100 at 4°C overnight. Then, a 10-minute washing with 0.1 M TBS was repeated 3 times and the sections were immersed in a secondary antibody solution containing Alexa Fluor (registered trademark) 488-conjugated donkey anti-mouse IgG (Invitrogen) at a final concentration of 20 µg/ml in 1% NST at room temperature for 1 hour. The secondary antibody solution was removed, and for nuclear staining, the sections were immersed in a 1% NST solution containing bisBenzimide H33342 trihydrochloride at a final concentration of 10 µg/ml at room temperature for 1 hour. Then, a 10-minute washing with 0.1 M TBS was repeated twice and the sections were coverslipped in a mounting medium (Mount Permafluor, Thermo scientific). The sections were observed with a high-end inverted fluorescence microscope (Axio observer. D1, Carl Zeiss).

### (3) Results

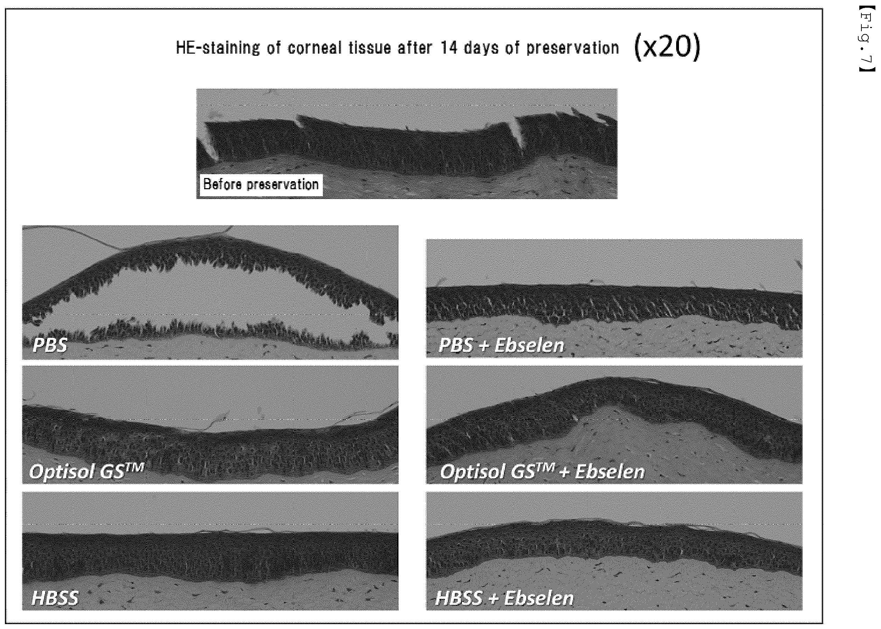

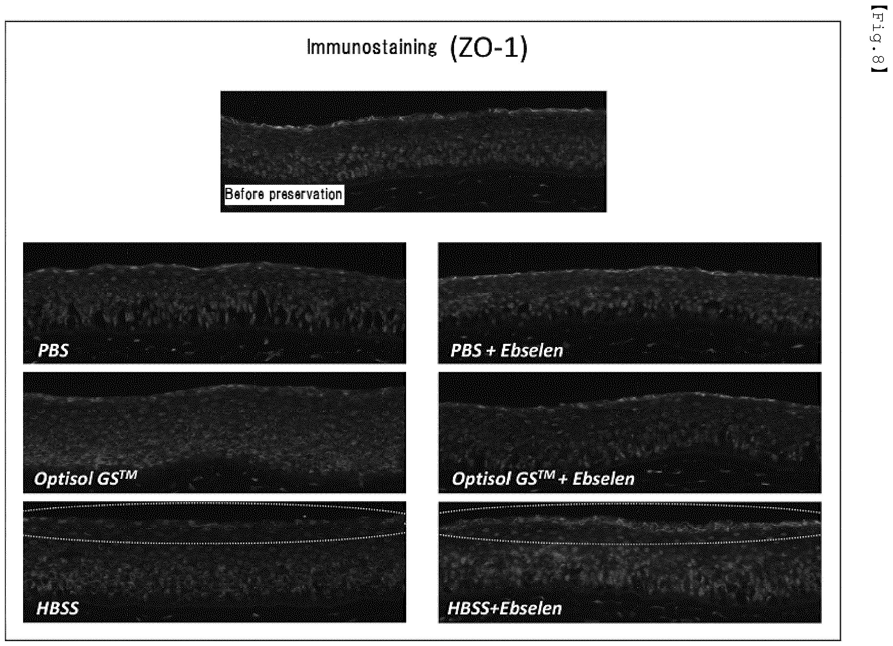

The results of HE staining are shown in Fig. 7, and the results of ZO-1 immunostaining are shown in Fig. 8. As shown in Fig. 7, while the epithelial layer of the porcine cornea preserved with PBS largely had come off, the epithelial layer of the porcine cornea preserved with ebselen-containing PBS was not separated in any part. As is clear from Fig. 8, after 14 days of preservation with ebselen-containing HBSS, corneal epithelial tight junctions were still formed (in the area enclosed by the dotted line in the figure).

### <Example 6: Expression of Nrf2-Related Genes in Human Oral Cell Sheet during Post-Preservation Culture Period>

A human oral cell sheet was preserved with ebselen-containing HBSS at 4°C for 7 days, and subsequently cultured in 10% KCM under the conditions of 37°C and 5% CO₂. The ebselen concentration was at the following three levels: 1 µM, 10 µM and 100 µM. Ebselen-free HBSS was used as a control. NQO-1 and HO-1 were selected as Nrf2 related genes. NQO-1 is short for NAD (P) H (quinone oxidoreductase 1), an enzyme which catalyzes an oxidation-reduction reaction involving two-electron reduction of quinone to hydroquinone, which is an easier form for conjugation and efflux by other drug-metabolizing enzymes. The expression of NQO-1 is known to be regulated by the activation of Nrf2. HO-1 is short for heme oxygenase, which serves to degrade heme into iron ion, carbon monoxide and biliverdin. Biliverdin, in turn, is converted to bilirubin by a reductase, and both biliverdin and bilirubin serve as free radical scavengers to protect a living body from oxidative stress. As is the case with NQO-1, the expression of HO-1 is known to be also regulated by the activation of Nrf2.

A luciferase transgenic rat-derived oral mucosal cell sheet was prepared in a 12-well plate. Before preservation and at 0, 6 and 24 hours after the start of post-preservation culture of the cell sheet preserved for 7 days, mRNA was extracted from the cell sheet and purified with the use of RNeasy plus micro kit (QIAGEN). From the purified mRNA, complementary DNA was synthesized with the use of SuperScript First-strand synthesis super mix for qRT-PCR (Invitrogen), and the threshold cycle (CT) values of gapdh (Rn01775763-g1, Applied Biosystems), Hmox1 (Rn01536933_m1, Applied Biosystems) and Nqo1 (Rn00566528_m1, Applied Biosystems) were determined with 7500 Fast Real-Time PCR System (Applied Biosystems). Then, the amounts of NQO-1 expression and HO-1 expression relative to the amount of expression of the house-keeping gene gapdh were calculated.

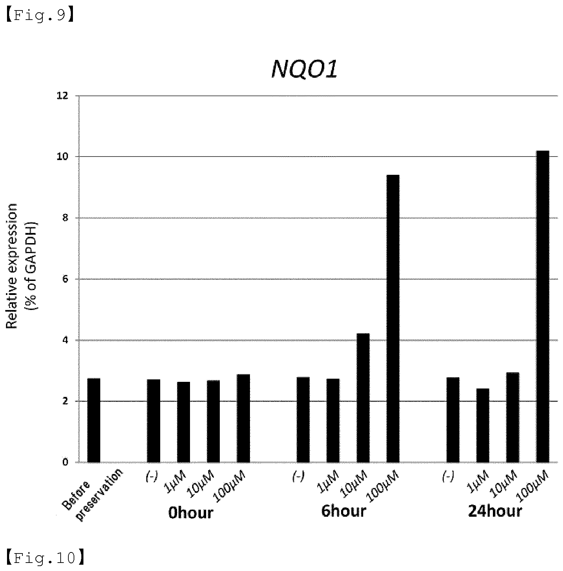

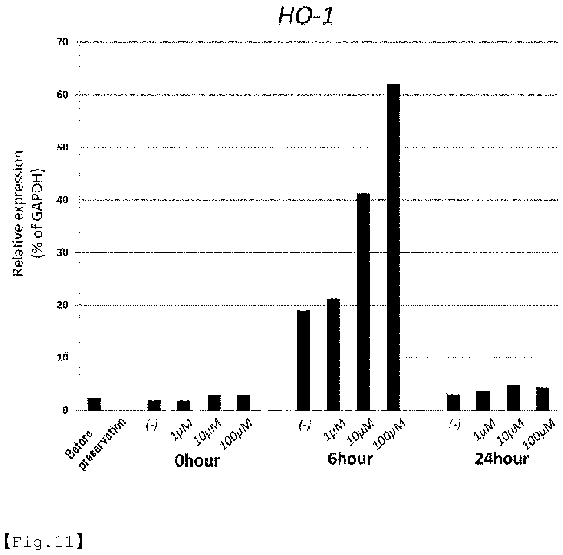

The results for NQO-1 are shown in Fig. 9 and the results for HO-1 are shown in Fig. 10. In the cell sheet preserved with HBSS containing ebselen at 10 µM or more, both NQO-1 expression and HO-1 expression were increased after 6 hours of the post-preservation culture. These results indicate that the ebselen contained in HBSS induced the activation of Nrf2 and thereby exerted beneficial effects on cell preservation.

### <Reference Example 7: Efficacy of tBHQ-Containing HBSS for Luciferase Transgenic Rat-Derived Oral Mucosal Cell Sheet>

tBHQ-containing HBSS was used as the preservation solution and the ATP level after 7 days of preservation was measured in the same manner as in Example 1. The tBHQ concentration was at the following three levels: 1 µM, 10 µM and 100 µM. HBSS containing no additives was used as the negative control, and HBSS containing ebselen (10 µM) was used as the positive control.

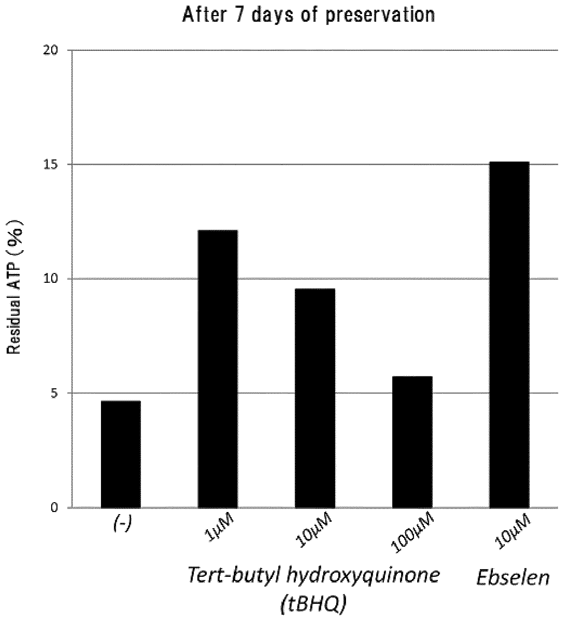

The results are shown in Fig. 11. As is clear from Fig. 11, the residual ATP level after 7 days of preservation was higher in the presence of tBHQ in HBSS than that in its absence. These results show that tBHQ also improves the cell viability when used as an additive in a preservation solution as is the case with ebselen.

## Claims

1. A tissue preservation solution being a Hank's balanced salt solution comprising ebselen.

2. A tissue preservation method comprising bringing a subject to be preserved into contact with the tissue preservation solution according to claim 1.

## Patentansprüche

1. Gewebekonservierungslösung, bei der es sich um Hanks-Mineralsalzmedium, umfassend Ebselen, handelt.

2. Gewebekonservierungsverfahren, umfassend das Bringen eines zu konservierenden Gegenstandes in Kontakt mit der Gewebekonservierungslösung nach Anspruch 1.

## Revendications

1. Solution de conservation des tissus qui est une solution salée équilibrée de Hank comprenant de l'ebselen.

2. Procédé de conservation des tissus comprenant la mise en contact d'un sujet à conserver avec la solution de conservation des tissus selon la revendication 1.
